**Europäisches Patentamt**

**European Patent Office**

**Office européen des brevets**

(19)

(11) Publication number: **0 116 468**

**A1**

(12) # EUROPEAN PATENT APPLICATION

(21) Application number: **84300828.5**

(22) Date of filing: **09.02.84**

(51) Int. Cl.³: **F 01 M 11/10**
**F 16 N 29/04, B 03 C 1/28**

(30) Priority: **10.02.83 GB 8303725**

(43) Date of publication of application:
**22.08.84 Bulletin 84/34**

(84) Designated Contracting States:
**DE FR IT**

(71) Applicant: **Tecalemit Electronics Limited**
**Longbridge Road**
**Plymouth Devon, PL6 8LA(GB)**

(72) Inventor: **Bogue, Robert William**
**Hilltown Cottage**
**Lamerton Near Tavistock Devon(GB)**

(74) Representative: **Abbott, David John et al,**
**Abel & Imray Northumberland House 303-306 High**
**Holborn**
**London, WC1V 7LH(GB)**

(54) **Magnetic particle collector.**

(57) A magnetic particle collector for magnetically attracting particles from a lubricating or other fluid has a permanent magnet in a housing of non-magnetic material which is retractable from an active position where it attracts particles to the outside of the housing to an inactive position which permits particles attracted to the outside of the housing to be flushed away by the fluid flow. The collector has a means such as a Hall effect device or a magnetic field sensitive resistor for sensing the amount of particles attracted to the housing by responding to the distortion of the magnetic field due to the accumulation of particles.

Magnetic Particle Collector

This invention relates to a magnetic particle collector and in particular to such a device for magnetically attracting particles from a lubricating or other fluid.

Magnetic plugs have been used for many years to collect ferromagnetic particles from the lubricating oil in the sumps of motor vehicle engines and have been of value in conjunction with conventional filtering especially during running-in, inspection of the particles collected enabling the kinds of wear occurring to be identified. It has been found that the debris collected by such plugs can provide an indication of incipient component failure in various types of machinery, and proposals have been made to incorporate into the plugs sensors enabling the quantities of debris collected to be measured without having to take them out. Examples of plugs incorporating sensors are described in British published patent application no. 2,029,580 A.

A difficulty which has been experienced with magnetic plugs having built-in sensors is that it is necessary to clean off the accumulated debris periodically if the sensitivity of the sensor is to be fully
utilised and the device is to remain responsive
to sudden accumulations of debris as indicators
of possible mechanical breakdowns. The cleaning
away of the debris could be effected by removal
of the plug, but this to some extent nullifies
the advantages obtained by using the sensor and
it may not be convenient to remove the plug if
drainage of the lubricant is necessary beforehand.
The use of scrapers to remove the debris has also
been proposed but these are not always effective.

It is an object of the invention to overcome the
above mentioned difficulty.

According to the invention there is provided a
magnetic device for attracting particles of
magnetic material from a lubricating or other
fluid having a housing containing magnet means
adjacent an active region of the housing and
means responsive to the accumulation of particles
at the active region to enable an indication of
the quantity accumulated to be obtained, wherein
in the active region the housing covers the magnet
means, is formed of non-magnetic material, and is sufficiently thin for an adequate magnetic field for the attraction of particles of magnetic material to be produced in the active region by the megnet means, and means is provided for enabling the magnet means to be moved away from the active region so as to reduce to substantially zero the magnetic field in the active region

When the magnet means is moved away from the active region the accumulated particles are released and may be flushed away by fluid flow to a filter. The housing may be of a non-magnetic metal such as aluminium or brass or it may be formed from a plastics material, for example.

The means enabling the magnet means to be moved may be an electromagnetic, hydraulic or pneumatic actuator connected to the magnet means to pull it away from the active region when the actuator is activated. Alternatively, a manually operable linkage may be provided for moving the magnet means.

The magnet means may be a bar magnet using a single pole to attract the particles, or a dipole or a

- 4 -

multipolar magnet producing a strong local magnetic field between adjacent poles.

The housing may include magnetic material away from the active region to provide a preferred path for the magnetic flux from the magnet means within the housing when the magnet means is retracted from the active region. There should be no magnetic material near the active region (except the magnet means) as remanent magnetism of the accumulated particles could tend to hold the particles at the active region when the magnet means is moved away.

The means responsive to the accumulation of particles may be attached to the magnet means or to the housing and could respond to the distortion of the magnetic field resulting from the accumulated magnetic particles. A Hall effect device or a magnetic field sensitive resistor could be used as the responsive means.

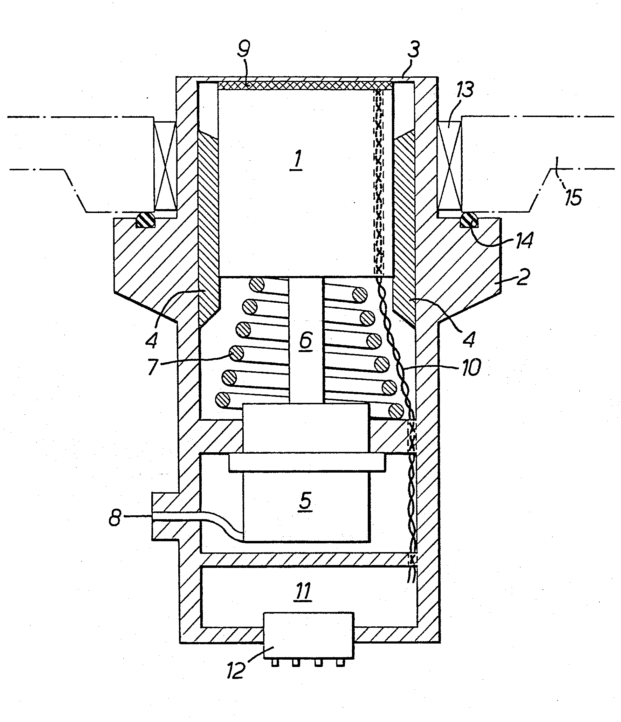

In order that the invention may be fully understood and readily carried into effect an embodiment of it will now be described with reference to the single figure of the accompanying drawing.

- 5 -

The embodiment of the invention shown in the drawing has a cylindrical bar magnet 1 with one pole towards the top of the sheet and the other towards the bottom. The magnet 1 is contained within a housing 2 of a non-magnetic material, such as brass, aluminium or plastics. The uppermost end 3 of the housing 2 is relatively thin so that when in the position shown the upper pole of the magnet 1 can produce a magnetic field outside the housing 2 sufficient to attract particles of magnetic material from suspension in a fluid nearby to the end 3, which forms the active region of the embodiment. The magnet 1 can move up and down on linear bearings 4, for example, formed of PTFE or PTFE coated inserts in the housing 2 and this movement is effected by an actuator 5, which in the example shown is hydraulic, but may be pneumatic or electromagnetic, connected to the magnet 1 by a rod 6. A spring 7 tends to hold the magnet 1 in its uppermost position in the housing 2, so that if the actuator is not activated the magnet 1 has its upper pole adjacent the end 3. When it is required to retract the magnet 1 from the end 3, hydraulic pressure is applied via a union 8 to the actuator 5 which then pulls the magnet 1 away from the end 3 so that its upper pole is sufficiently far away from the end 3 that the magnetic field in the active region just outside the end 3 is reduced substantially to zero.

A sensor 9, which may be attached to the magnet 1 or to the end 3 of the housing 2, is sensitive to the distortion of the magnetic field from the upper pole of the magnet 1 due to the accumulation of particles of magnetic material on the outside of the end 3, and enables an electrical signal representing the quantity accumulated to be derived via an electrical connection 10. Electronic circuitry for deriving and processing the electrical signal is contained in a space 11 within the housing 2, and connections can be made to the circuitry by means of a contact socket 12.

The embodiment can be screwed into a threaded hole in the wall of a sump or oil pipe indicated at 15 using thread 13. An 0-ring 14 serves to seal the attachment against fluid leakage.

In use the magnet 1 would be withdrawn from the active region whilst a flow of lubricant or other fluid is maintained past the device, so that the accumulated particles would be released and carried away by the fluid to, for example, a filter. This would take place after the quantity of particles accumulated had been measured and noted to monitor the mechanical health and rate of wear of the machine concerned. The electronic circuitry may include a threshold means to detect any sudden increase in the amount of magnetic material collected by the device and to give a warning of possible internal damage to the machine.

It may be desired at this time, or some other time, to remove the entire plug together with the magnetic material adhering to it so that the material can be examined; when doing this the magnet should be left in the uppermost position to hold the material in place whilst the plug is being removed.

The embodiment can be modified in many ways. For example, the method of its attachment to a wall of a container for fluid could be changed to the use of a clamp or a ring of bolts. The device could be built into the wall and not attached to it.

Although from some points of view it is advantageous to employ a bar magent of which a single pole is used for particle capture because the field strength is inversely proportional to the square of the distance from the pole, it may be preferable to use a dipole or a multipolar magnet because of the higher field strength available hear the magnet despite the more rapid attenuation of the field with distance from the magnet. It is envisaged therefore that a device according to the invention could employ whatever magnet configuration is considered suitable for the application in question.

As mentioned above, no magnetic material should remain close to the active region of the device when the magnet itself is withdrawn, because the particles themselves may have become magnetised sufficiently to hold them in the active region by attraction to the magnetic material despite the withdrawal of the magnet. However, the housing may include a circuit of magnetic material for containing or limiting the magnetic field due to the magnet when it is withdrawn from the active region.

Instead of using an actuator to withdraw the magnet from the active region as described with reference to the embodiment, a simple mechanical arrangement could be employed, for example, a manually operated screw or lever mechanism.

0116468

WHAT WE CLAIM IS:

1.　A magnetic device for attracting particles of magnetic material from a lubricating or other fluid having a housing containing magnet means adjacent an active region of the housing and means responsive to the accumulation of particles at the active region to enable an indication of the quantity accumulated to be obtained, wherein in the active region the housing covers the magnet means, is formed of non-magnetic material, and is sufficiently thin for an adequate magnetic field for the attraction of particles of magnetic material to be produced in the active region by the magnet means, and means is provided for enabling the magnet means to be moved away from the active region so as to reduce to substantially zero the magnetic field in the active region.

2.　A device according to claim 1 wherein the non-magnetic material is aluminium, brass or a plastics material.

3.　A device according to claim 1 or 2 wherein the entire housing is formed of a non-magnetic material.

4.　A device according to claim 1 or 2 wherein the housing includes magnetic material away from the active region to provide a preferred path for the magnetic flux from the magnet means within the housing when the magnet means is retracted from the active region.

5. A device according to any preceding claim wherein the means enabling the magnet means to be moved is an electromagnetic, hydraulic or pneumatic actuator connected to the magnet means to pull it away from the active region when the actuator is activated.

6. A device according to any of claims 1 to 4 wherein manual means is provided connected to the magnet means whereby the magnet means can be moved away from the active region.

7. A device according to any preceding claim wherein the magnet means is a bar magnet mounted so that one pole thereof is effective to attract magnetic particles at the active region.

8. A device according to any preceding claim wherein the magnet means is a dipole or multipolar magnet producing a strong local magnetic field between adjacent poles which is effective to attract magnetic particles at the active region.

9. A device according to any preceding claim wherein the means responsive to the accumulation of magnetic particles is responsive to the distortion of the magnetic field produced by the accumulated magnetic particles.

10. A device according to claim 9 wherein the responsive means is a Hall effect device.

11. A device according to claim 9 wherein the responsive means is a magnetic field sensitive resistor.

12.     A device according to claim 9, 10 or 11 wherein the responsive means is attached to the magnet means.

13.     A device according to claim 9, 10 or 11 wherein the responsive means is attached to the housing.

14.     A device according to any preceding claim wherein the magnet means is carried on linear bearings within the housing and is moved on those bearings towards and away from the active region.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y,D | GB-A-2 029 580 (CENTRAL ELECTRICITY GENERATING BOARD) * Page 2, lines 8-50, 81-129; page 3, lines 50-60, 96-102; figures 1-3 * | 1-4,7-11 | F 01 M 11/10<br>F 16 N 29/04<br>B 03 C 1/28 |
| Y | US-A-2 800 230 (THOMA) * Column 2, lines 34-42; column 6, lines 31-46; figures 10,12 * | 1 | |
| A | FR-A-2 488 149 (DAIDO TOKUSHUKO) * Page 3, lines 3-20; page 8, lines 3-14; page 6, lines 15-30; figures 3,4 * | 1,5,6 | |
| A | GB-A-1 241 204 (ROLLS-ROYCE) | | **TECHNICAL FIELDS SEARCHED (Int. Cl. 3)** |
| A | FR-A-2 438 835 (TECHNICAL DEVELOPMENT) | | F 01 M |
| A | US-A-2 698 090 (TIMKEN) | | F 16 N<br>B 03 C<br>B 01 D<br>G 01 N<br>F 01 D |

The present search report has been drawn up for all claims

| Place of search | Date of completion of the search | Examiner |
|---|---|---|
| THE HAGUE | 19-04-1984 | KOOIJMAN F.G.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503. 03.82